# EUROPÄISCHE PATENTSCHRIFT

(11) **EP 2 100 102 B1**
(45) Veröffentlichungstag und Bekanntmachung des Hinweises auf die Patenterteilung: **25.01.2017**
(21) Anmeldenummer: 07856117.2
(22) Anmeldetag: 17.12.2007
(51) Int. Cl.: G01D 5/14

(54) **MESSANORDNUNG**
MEASURING ARRANGEMENT
DISPOSITIF DE MESURE

(30) Priorität: 09.01.2007 DE 102007002085
(43) Veröffentlichungstag der Anmeldung: 16.09.2009
(73) Patentinhaber: Lemförder-Electronic GmbH, 32339 Espelkamp (DE)
(72) Erfinder: HAEVESCHER, Rainer, 32351 Stemwede (DE); FÜRHOFF, Achim, 32278 Kirchlengern (DE); HUBERT, Maik, 32257 Bünde (DE)
(86) Internationale Anmeldenummer: PCT/DE2007/002268
(87) Internationale Veröffentlichungsnummer: WO 2008/083653

(56) Entgegenhaltungen:
- EP-A- 0 427 882
- EP-A- 1 524 504
- DE-A1- 2 446 132
- DE-A1- 10 249 919
- DE-A1- 19 933 244

## Beschreibung

Die Erfindung betrifft eine Messanordnung mit einem magnetfeldempfindlichen Sensor, der einen eine durchgehende Ausnehmung und eine diese begrenzende Wandung aufweisenden Körper aus Magnetwerkstoff und wenigstens einen sich zwischen zwei Enden erstreckenden und durch die Ausnehmung hindurchgeführten elektrischen Leiter umfasst, einem relativ zu dem Körper bewegbaren Magnet, von dessen Magnetfeld die Permeabilität des Körpers in Abhängigkeit von dem Abstand zwischen dem Körper und dem Magnet variierbar ist, und einer mit dem Leiter verbindbaren oder verbundenen Auswerteeinrichtung, mittels welcher die Änderung der Permeabilität des Körpers erfassbar ist. Ferner betrifft die Erfindung einen magnetfeldempfindlichen Sensor für eine derartige Messanordnung.

Die EP1524504 offenbart ein Positionssensor mit einem Wellenleiter, einem elektrischen Rückleiter, einer am Wellenleiter im Detektorbereich angeordneten Detektor-Spule, sowie einem Positionsmagneten, welches entlang des Wellenleiters bewegbar ist, wobei in dem zwischen dem Detektorbereich und dem davon abgewandten freien Ende des Wellenleiters liegenden Mittelteil der Wellenleiter innerhalb eines hohlen Rückleiters aus elektrisch leitfähigem, nicht magnetischem Material angeordnet ist.

Die DE 199 33 244 A1 offenbart ein Potentiometer, der mindestens ein Paar von Magnetowiderstandselementen enthält, die paarweise auf einem Substrat in einem solchen Zustand ausgebildet sind, dass die Elemente untereinander so verschaltet sind, dass die Orientierungen der Magnetisierungsachsen von fixierten magnetischen Schichten der Elemente um 180 DEG gegeneinander versetzt sind. Ein magnetisches Codierelement ist drehbar gegenüberliegend den Magnetowiderstandselementen auf dem Substrat derart angeordnet, dass der Drehmittelpunkt des magnetischen Codierelements durch eine Zwischenposition der paarweisen Magnetowiderstandselemente läuft. Das magnetische Codierelement besitzt mindestens zwei Pole entlang seiner Drehrichtung.

Die DE2446132 offenbart eine Sensorvorrichtung mit einem Sensor, der aus einem ringförmig geschlossenen, magnetisch sättigbaren Kern, einer Abfragewicklung, die um ein Ende des Kernes gewickelt ist, und aus einem Hochfrequenzwechselstromgenerator besteht. Ein Permanentmagnet ist in der Nähe des Kernes angeordnet, um einen Magnetfluss über die Flusswege, die durch den Kern verlaufen, zu liefern. Die Abfragewicklung hat zwei Enden.

Aus der DE 102 49 919 A1 ist eine Spulenanordnung als Magnetsensor bestehend aus wenigstens einer Ringkernspule bekannt, die einen geschlossenen, mit einer Spule versehenen Kern aus ferromagnetischem Material und einen in einer Relativbewegung vorbeibewegbaren Magneten aufweist. Das zu detektierende Magnetfeld bewirkt eine Änderung der Kernpermeabilität und somit der Spuleninduktivität, die mit einer Auswerteeinrichtung erfasst werden kann.

Nachteilig an dieser Spulenanordnung ist der relativ hohe Fertigungsaufwand für das Aufwickeln der Spule.

Ausgehend von diesem Stand der Technik liegt der Erfindung die Aufgabe zugrunde, die eingangs genannte Messanordnung bzw. den eingangs genannten magnetfeldempfindlichen Sensor derart weiterzubilden, dass der Fertigungsaufwand reduzierbar ist.

Diese Aufgabe wird erfindungsgemäß mit einer Messanordnung nach Anspruch 1 und mit einem magnetfeldempfindlichen Sensor nach Anspruch 11 gelöst. Bevorzugte Weiterbildungen sind in den Unteransprüchen gegeben.

Die erfindungsgemäße Messanordnung weist einen magnetfeldempfindlichen Sensor, der einen eine durchgehende Ausnehmung und eine diese begrenzende Wandung aufweisenden Körper aus Magnetwerkstoff und wenigstens einen sich zwischen zwei Enden erstreckenden und durch die Ausnehmung hindurchgeführten elektrischen Leiter umfasst, einen relativ zu dem Körper bewegbaren Magnet, von dessen Magnetfeld die Permeabilität des Körpers in Abhängigkeit von dem Abstand zwischen dem Körper und dem Magnet variierbar ist, und eine mit dem Leiter verbindbare oder verbundene Auswerteeinrichtung auf, mittels welcher die Änderung der Permeabilität des Körpers erfasst werden kann, wobei der Leiter die Wandung nicht umschlingt. Der Leiter erstreckt sich dabei zwischen seinen beiden Enden.

Bei der erfindungsgemäßen Ausgestaltung der Messanordnung kann der elektrische Leiter einfach durch die Ausnehmung hindurchgesteckt werden, ohne den Leiter um die Wandung herumzuwickeln. Dies vereinfacht in einem nicht unerheblichen Maße den Fertigungsaufwand für den magnetfeldempfindlichen Sensor und somit für die Messanordnung. Überraschenderweise liefert der magnetfeldempfindliche Sensor auswertbare Signale und verhält sich dabei in elektrotechnischer Hinsicht wie, oder fast wie eine Spule, die mit einer Windung auf die Wandung aufgewickelt ist.

Die Wandung bildet bevorzugt einen die Ausnehmung umschließenden Ring, der insbesondere geschlossen ist. Somit ist von dem Körper aus Magnetwerkstoff insbesondere ein Ring oder Ringkern gebildet. Der Querschnitt des Rings kann eine beliebige Form aufweisen. Bevorzugt ist der Querschnitt aber kreisringförmig.

Bei dem Magnetwerkstoff handelt es sich bevorzugt um ein hochpermeables Material, dessen Permeabilität mit sich änderndem Abstand zwischen dem Magnet und dem Körper variiert. Insbesondere nimmt der Magnetwerkstoff bei Unterschreitung eines bestimmten Abstands (Schaltabstand) zwischen dem Magnet und dem Körper seine Sättigungsmagnetisierung an, sodass die relative Permeabilität auf den Wert 1 oder näherungsweise auf den Wert 1 fällt. Diese vergleichsweise große Änderung der Permeabilität bewirkt eine deutlich messbare Änderung der Induktivität des elektrischen Leiters, die mittels der Auswerteeinrichtung erfassbar ist. Somit geht der Magnetwerkstoff in Abhängigkeit von dem Abstand zwischen dem Körper und dem Magnet insbesondere magnetisch in Sättigung bzw. nimmt die Sättigungsmagnetisierung an.

Als Werkstoff wird bevorzugt ein weichmagnetisches Material verwendet. Insbesondere liegt die relative Permeabilität oder Anfangspermeabilität des Magnetwerkstoffs in einem Bereich von ca. 4000 bis 150000 oder darüber. Diese hohen Permeabilitäten sind z.B. mit einem nanokristallinen Material, insbesondere mit einem nanokristallinen Metall erzielbar. Das nanokristalline Material kann z.B. nanokristallines Eisen bzw. eine nanokristalline Legierung auf Eisenbasis sein. Alternativ kann auch ein Ferrit oder ein anderes ferromagnetisches Material als Magnetwerkstoff verwendet werden. Der Leiter ist insbesondere aus Metall, wie z.B. Kupfer, ausgebildet.

Der Körper kann zwischen zwei einander gegenüberliegenden Wänden angeordnet sein, durch welche hindurch sich der Leiter erstreckt und zwischen denen der Leiter bevorzugt ausschließlich gerade verläuft. Insbesondere ist der Leiter mit einer der Wände fest verbunden, sodass zum Montieren des Sensors der Leiter zunächst durch die Ausnehmung des Körpers und danach durch die andere Wand hindurchgesteckt wird, die dafür ein geeignetes durchgehendes Loch aufweist. Der Körper ist insbesondere in einem Gehäuse angeordnet, welches beide oder eine der Wände umfassen kann. Das Gehäuse und/oder die Wände bestehen bevorzugt aus Kunststoff und können als Spritzgussteil hergestellt sein.

Eine der Wände bildet insbesondere den Boden eines topfförmigen Gehäuses, das mit einem Deckel verschließbar oder verschlossen ist, der von der anderen Wand gebildet ist. Dabei kann der wenigstens eine Leiter von einer Halterung gehalten oder in diese eingebettet sein, die bevorzugt mit dem Deckel fest verbunden oder einstückig ausgebildet ist. Der Boden kann eine durchgehende Öffnung aufweisen, in welche die Halterung eingreift. Ferner ist der in dem Gehäuse angeordnete Körper aus Magnetwerkstoff von der Halterung durchgriffen, so dass sich insgesamt ein besonders kompakter und einfach zu montierender Sensor ergibt.

Gemäß einer Variante kann das Gehäuse auch eine ringförmige Ausnehmung aufweisen, in die der Körper aus Magnetwerkstoff eingeschoben bzw. eingeführt wird oder ist. Die Ausnehmung umringt dabei ein Gehäuseinnenteil, durch welches der wenigstens eine Leiter hindurchgeführt ist. Ferner umgibt oder umring ein Gehäuseaußenteil den Körper, der somit weitgehend gegen Verschmutzung und äußere Krafteinwirkung geschützt ist. Das Gehäuseinnenteil ist mit dem Gehäuseaußenteil insbesondere einstückig ausgebildet oder fest verbunden, so dass die ringförmige Ausnehmung bevorzugt ein ringförmiges Sackloch bildet. Unter dem Begriff Sackloch soll insbesondere verstanden werden, dass die Ausnehmung einseitig von einem Boden begrenzt ist. Das Gehäuseinnenteil ist insbesondere zylinderförmig ausgebildet. Ferner kann das Gehäuseaußenteil eine Außenfläche mit wenigstens einem ebenen Flächebereich aufweisen, an dem z.B. ein Sauger einer automatischen Bestückungsmaschine angreifen kann. Auch dieses Gehäuse besteht bevorzugt aus Kunststoff und kann als Kunststoff-Spritzgussteil hergestellt sein.

Der Leiter kann außerhalb des Gehäuses abgewinkelt sein, sodass zum Kontaktieren der beiden Enden des Leiters mit Kontaktflächen einer Leiterplatte der Körper auf die Leiterplatte aufgesetzt werden kann. Bevorzugt ist der elektrische Leiter aber insgesamt gerade ausgebildet. Zur Montage eines derart ausgebildeten Sensors an einer Leiterplatte kann in diese eine Ausnehmung eingebracht sein, in welche der Körper eingesetzt oder eingehängt wird. Dabei liegen die Enden des Leiters an den Rändern der Ausnehmung auf und können dort mit an der Oberfläche der Leiterplatte angeordneten Kontaktflächen in Kontakt gebracht werden. Die Enden des Leiters bilden somit Kontakte zum elektrischen Kontaktieren des Leiters.

Der Leiter kann an seinen Endbereichen oder durchgängig einen viereckigen Querschnitt aufweisen, so dass das Anlöten der Endbereiche des Leiters an die Kontaktflächen erleichtert ist. Auch ist die Montage an der Leiterplatte erleichtert, da der Sensor nicht wegrollen kann. Ferner stehen insgesamt vier Flächen zur Kontaktierung zur Verfügung.

Aus Sicherheitsgründen kann es sinnvoll sein, den Sensor redundant vorzusehen, um bei Ausfall des Sensors mit dem redundanten Sensor weiterarbeiten zu können. Üblicherweise wird dafür der Sensor als Ganzes mehrfach vorgesehen, wodurch allerdings der Raumbedarf und die Fertigungskosten steigen können. Bei der erfindungsgemäßen Messanordnung ist es möglich, dass der Sensor wenigstens einen sich zwischen zwei anderen Enden erstreckenden und durch die Ausnehmung hindurchgeführten zusätzlichen elektrischen Leiter aufweist, der die Wandung insbesondere nicht umschlingt. Bevorzugt sind dabei die Leiter übereinstimmend ausgebildet und können parallel zueinander verlaufen. Ferner bilden die anderen Enden des zusätzlichen Leiters insbesondere Kontakte zum elektrischen Kontaktieren des zusätzlichen Leiters.

Somit ist es möglich, einen redundanten magnetfeldempfindlichen Sensor unter Verwendung gemeinsamer Bauteile oder eines gemeinsamen Bauteils (Körper aus Magnetwerkstoff) auszubilden. Da der Körper aus Magnetwerkstoff in der Regel als ausfallsicher betrachtet werden kann, hat die gemeinsame Nutzung von Bauteilen auch keine Sicherheitsnachteile gegenüber dem mehrfachen Anordnen vollständig eigenständiger Sensoren. Das Hindurchführen von wenigstens zwei separaten Leitern durch die Ausnehmung hat zusätzlich den Vorteil, dass sich die Leiter gegenseitig erregen können, sodass nicht nur eine Ausfallsicherheit sondern zusätzlich auch noch eine gegenseitige Funktionsfähigkeitsprüfung bzw. Diagnose möglich ist.

Der Magnetwerkstoff für den Körper wird insbesondere in Form einer Folie oder eines Bands zur Verfügung gestellt, sodass die Folie oder das Band zum Bilden des Körpers aus Magnetwerkstoff aufgewickelt werden kann. Die Wandung ist somit bevorzugt aus einem aufgewickelten Band aus Magnetwerkstoff gebildet und weist insbesondere eine Ringform auf. Die Bandform des Magnetwerkstoffs hat den Vorteil, dass damit relativ geringe Banddicken realisierbar sind. Dies bewirkt einen relativ hohen elektrischen Widerstand des Bands, sodass Wirbelstromverluste gering gehalten werden können. Ferner ist es möglich, dem Körper durch das Aufwickeln eine gewisse Elastizität zu verleihen.

Die Änderung der Permeabilität des Magnetwerkstoffs kann z.B. dadurch ermittelt werden, dass wenigstens ein elektrischer Impuls an den Leiter abgegeben wird. Die Impulsantwort von dem Leiter wird gemessen und ausgewertet, wobei unterschiedliche Permeabilitäten zu unterschiedlichen Impulsantworten führen. Das Abgeben des elektrischen Impulses sowie das Auswerten der Impulsantwort erfolgt insbesondere mittels der Auswerteeinrichtung, die hierzu einen Mikroprozessor oder Mikrocontroller aufweisen kann. Die Auswertung erfolgt bevorzugt digital, wobei die Impulsantwort bzw. das von dem Leiter kommende Signal einem Analog-Digital-Wandler zugeführt wird, der insbesondere in dem Mikrokontroller integriert ist. Dabei ist es möglich, die Impulsantwort bzw. das von dem Leiter kommende Signal unverstärkt dem Analog-Digital-Wandler zuzuführen, so dass zwischen dem Leiter und dem Analog-Digital-Wandler bevorzugt kein Verstärker geschaltet ist.

Sind mehrere magnetfeldempfindliche Sensoren vorgesehen, so kann jeder der Sensoren mit einer separaten Auswerteeinrichtung verbunden sein. Bevorzugt sind die Sensoren aber mit den Eingängen wenigstens eines Multiplexers verbunden, dessen Ausgang z.B. mit der Auswerteeinrichtung verbunden ist. Der Multiplexer kann aber auch Teil der Auswerteeinrichtung sein. Somit können mehrere Sensoren mit derselben Auswerteeinrichtung verbunden bzw. abgefragt werden.

Räumlich hintereinander angeordnete Sensoren können voneinander getrennte Körper aus Magnetwerkstoff aufweisen. Alternativ ist es möglich, einen einzigen Körper aus Magnetwerkstoff für die Sensoren zu verwenden, deren Leiter räumlich hintereinander angeordnet und durch die Wandung des Körpers hindurchgeführt sind. Dieser einzige Körper aus Magnetwerkstoff ist dann in mehrere logische Körper aus Magnetwerkstoff unterteilt, die jeweils einem der Sensoren zugeordnet sind. Bevorzugt sind die logischen Körper aus Magnetwerkstoff aber auch magnetisch voneinander entkoppelt, so dass das Magnetfeld des Magneten nicht mehrere logische Körper gleichzeitig in magnetische Sättigung versetzt.

Die erfindungsgemäße Messanordnung wird insbesondere zur Erfassung der Position eines ersten Bauteils relativ zu einem zweiten Bauteil verwendet. Dabei kann der Magnet an dem ersten Bauteil und der wenigstens eine magnetfeldempfindliche Sensor an dem zweiten Bauteil vorgesehen sein. Bevorzugt sind aber mehrere magnetfeldempfindliche Sensoren, die insbesondere gleichartig aufgebaut sind, an dem zweiten Bauteil vorgesehen, an denen das erste Bauteil mit dem Magnet vorbeibewegt werden kann. Somit können mehrere Positionen des ersten Bauteils relativ zu dem zweiten Bauteil mittels der Sensoren erfasst werden. Insbesondere wird die Messanordnung für die Wählhebeleinrichtung eines Kraftfahrzeugs verwendet, so dass das ersten Bauteil z.B. von einem Wählhebel und das zweite Bauteil z.B. von einer karosseriefesten Halterung gebildet ist, relativ zu welcher der Wählhebel in unterschiedliche Schaltpositionen schwenkbar bzw. stellbar ist. Die Sensoren sind den unterschiedlichen Schaltpositionen zugeordnet, sodass die Auswerteeinrichtung in Abhängigkeit von der erfassten Schaltposition das Fahrzeuggetriebe ansteuern kann.

Die Erfindung betrifft ferner einen magnetfeldempfindlichen Sensor mit einem eine durchgehende Ausnehmung und eine diese begrenzende Wandung aufweisenden Körper aus Magnetwerkstoff und wenigstens einem sich zwischen zwei Enden erstreckenden und durch die Ausnehmung hindurchgeführten elektrischen Leiter, wobei die Permeabilität des Körpers in Abhängigkeit eines äußeren Magnetfelds variierbar ist, und wobei der Leiter die Wandung nicht umschlingt. Dieser magnetfeldempfindliche Sensor kann gemäß allen genannten Ausgestaltungen weitergebildet sein und wird insbesondere für die erfindungsgemäße Messanordnung verwendet. Ferner wird das äußere Magnetfeld bevorzugt von dem zuvor beschrieben Magnet erzeugt, der insbesondere ein Permanentmagnet ist. Alternativ kann dieser Magnet aber auch ein Elektromagnet sein. Der Magnetwerkstoff kann durch das äußere Magnetfeld insbesondere den Zustand magnetischer Sättigung annehmen.

Der Sensor dient bevorzugt zur Erfassung der Position eines Betätigungselements, welches hier als Magnet ausgebildet ist. Dabei soll insbesondere erkannt werden können, ob der Abstand zwischen dem Magnet und dem Körper aus Magnetwerkstoff den Schaltabstand unterschritten hat oder nicht. Bevorzugt versetzt der Magnet bei Annäherung den Ringkern in Sättigung, d. h. die Permeabilität sinkt signifikant. Dieser Effekt lässt sich durch Messung verschiedener elektrischer Größen auswerten. Beispiele für eine solche Auswertung sind: Auswerten der Impulsantwort auf ein Rechtecksignal, Bestimmen der Induktivität und/oder Messen des Phasengangs oder der Amplitude eines Wechselsignals.

Vorteilhaft bei der erfindungsgemäßen Messanordnung ist, dass der Sensor durch seine Gestaltung sehr kostengünstig und automatisierbar hergestellt werden kann und/oder der Sensor in seiner redundanten Ausführung zwei unabhängige Auswertekreise bedienen kann, sodass anstelle von bisher zwei Sensoren nur noch ein Sensor benötigt wird, um Redundanz zu erzielen. Ferner ist eine Diagnosefähigkeit nicht nur im betätigten Zustand sondern auch im unbetätigten Zustand möglich, da beide elektrischen Leiter sich selbst oder gegenseitig erregen können.

Der Sensor kann im elektrotechnischen Sinn als Spule betrachtet werden, die einen hochpermeablen Ringkern aufweist. Mit nur einer Windung kann die für die elektrische Sensorfunktion hinreichende Induktivität erreicht werden, wobei sich eine Windung bei dem Ringkern durch das einfache Hindurchführen eines elektrischen Leiters durch den Ringkern realisieren lässt. Ein zusätzliches Hindurchführen weiterer elektrischer Leiter ermöglicht eine redundante Signalauswertung. Durch diese optimal vereinfachte Konstruktion ergeben sich zahlreiche Vorteile bei der Herstellung und beim Vertrieb des Sensors, von denen nachfolgend einige aufgeführt sind: Vereinfachtes automatisiertes Fertigungsverfahren, konstruktiv bedingte geringe Fertigungstoleranzen erhöhen sensorische Messgenauigkeit, Wegfall des bei Spulen erforderlichen Bewicklungsvorgangs, Kosteneinsparung gegenüber bisherigen Sensorverfahren, Realisierung der Redundanz in einem Bauteil, erhöhte Funktionssicherheit/Verfügbarkeit durch Reduzierung der Bauteil-Komplexität, Diagnosefähigkeit, geringerer Aufwand für die elektronische Schaltung und weniger Aufwand bei Erweiterung um weitere Sensoren in einem System gegenüber anderen induktiven Lösungen, durch Materialeigenschaften steuerbare Temperaturkompensation, da sich die thermischen Eigenschaften des Magneten und die Sättigungsinduktion des Sensor-Ringkerns aufheben können, hohe Störabstände auf magnetische Störfelder durch Ringkern mit hoher Sättigungsinduktion.

Die Erfindung wird nachfolgend anhand bevorzugter Ausführungsformen unter Bezugnahme auf die Zeichnung beschrieben. In der Zeichnung zeigen:
- Fig. 1: eine schematische Ansicht einer Messanordnung gemäß einer ersten Ausführungsform der Erfindung,
- Fig. 2: eine Seitenansicht des Sensors nach Fig. 1,
- Fig. 3: eine Rückansicht des Sensors nach Fig. 1,
- Fig. 4: einen Längsschnitt durch den Sensor nach Fig. 1,
- Fig. 5: einen Querschnitt durch den Sensor nach Fig. 1,
- Fig. 6: eine schematische Ansicht eines Körpers aus Magnetwerkstoff,
- Fig. 7: eine Seitenansicht eines Sensors gemäß einer zweiten Ausführungsform der Erfindung,
- Fig. 8: eine Unteransicht des Sensors nach Fig. 7,
- Fig. 9: eine Vorderansicht des Sensors nach Fig. 7,
- Fig. 10: eine Leiterplatte mit mehreren Sensoren,
- Fig. 11: ein schematisches Schaltbild mit mehreren Sensoren und Auswerteeinrichtung,
- Fig. 12: einen Längsschnitt durch einen Sensor gemäß einer Variante der ersten Ausführungsform,
- Fig. 13: eine Seitenansicht eines Sensors gemäß einer Variante der zweiten Ausführungsform und
- Fig. 14: eine Schnittansicht des Sensors gemäß der zweiten Ausführungsform.

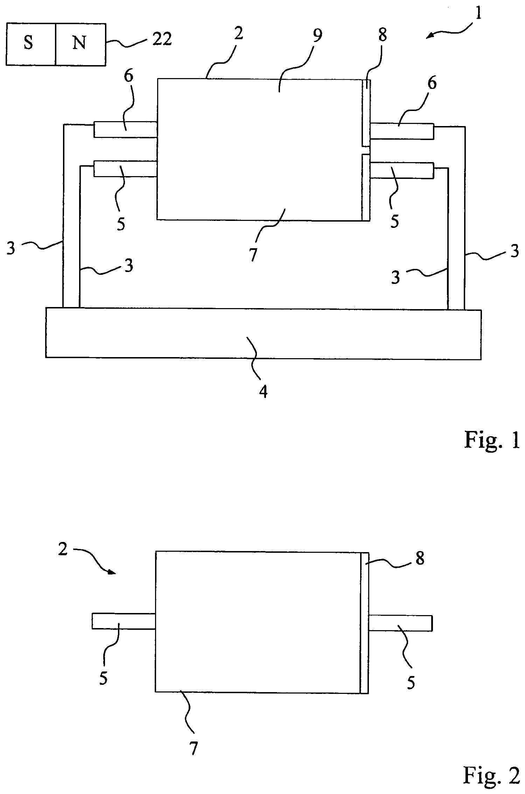

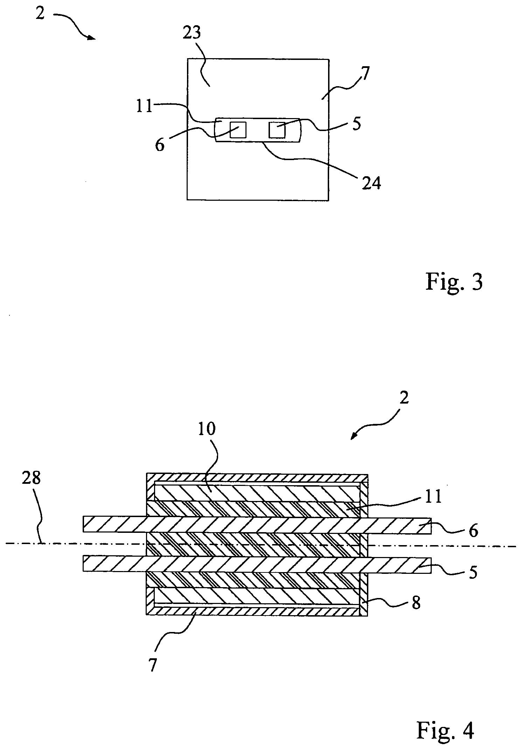

Aus Fig. 1 ist eine schematische Ansicht einer Messanordnung 1 gemäß einer ersten Ausführungsform der Erfindung ersichtlich, wobei ein magnetfeldempfindlicher Sensor 2 über elektrische Leitungen 3 mit einer Auswerteeinrichtung 4 verbunden ist. Der magnetfeldempfindliche Sensor 2 weist zwei elektrische Leiter 5 und 6 auf, mit denen die elektrischen Leitungen 3 verbunden sind, wobei sich die elektrischen Leiter 5 und 6 durch ein Gehäuse 7 des Sensors 2 hindurcherstrecken. Das Gehäuse 7 ist topfförmig ausgebildet und mittels eines Deckels 8 verschlossen. Die Außenfläche 9 des Gehäuses 7 ist zumindest bereichsweise plan, sodass der Sensor 2 mit dem Sauger einer automatischen Bestückungsvorrichtung festgehalten werden kann. Ferner ist ein Magnet 22 gezeigt, dessen Magnetfeld mit dem magnetfeldempfindlichen Sensor 2 in Wechselwirkung treten kann. Der Sensor 2 ist in Fig. 1 in Draufsicht gezeigt, wohingegen der Sensor 2 in Fig. 2 in einer Seitenansicht und in Fig. 3 in einer Rückansicht dargestellt ist.

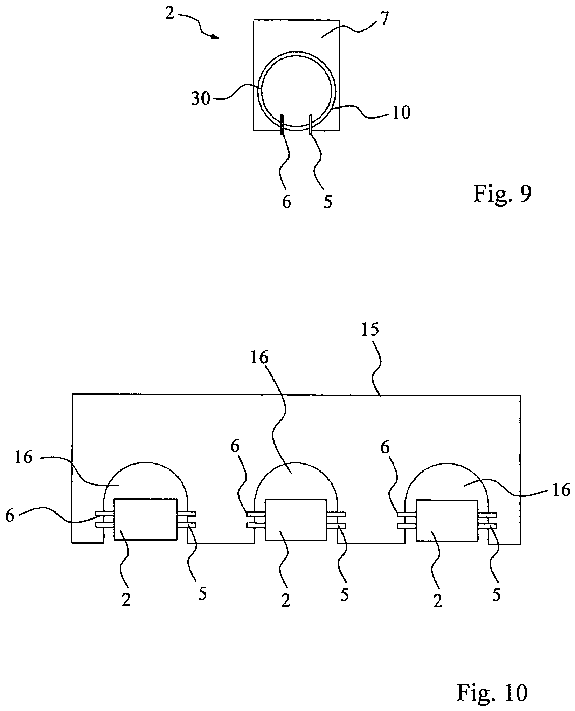

Aus Fig. 4 ist ein Längsschnitt durch den Sensor 2 ersichtlich, wobei in dem Gehäuse 7 ein ringförmiger Körper 10 aus Magnetwerkstoff angeordnet ist, durch welchen hindurch sich die beiden Leiter 5 und 6 erstrecken, die hier insgesamt gerade ausgebildet sind und parallel zueinander verlaufen. Die Leiter 5 und 6 sind im Abstand zueinander von einer Halterung 11 gehalten, die bevorzugt fest mit dem Deckel 8 verbunden ist. In dem Boden 23 des Gehäuses 7 ist eine durchgehende Ausnehmung 24 vorgesehen, in welche die Halterung 11 eingreift, wobei sich die Leiter 5 und 6 durch die Ausnehmung 24 hindurcherstrecken. Der Sensor 2 kann insbesondere in eine Ausnehmung einer Leiterplatte eingehängt werden, was im Zusammenhang mit Fig. 10 erläutert wird.

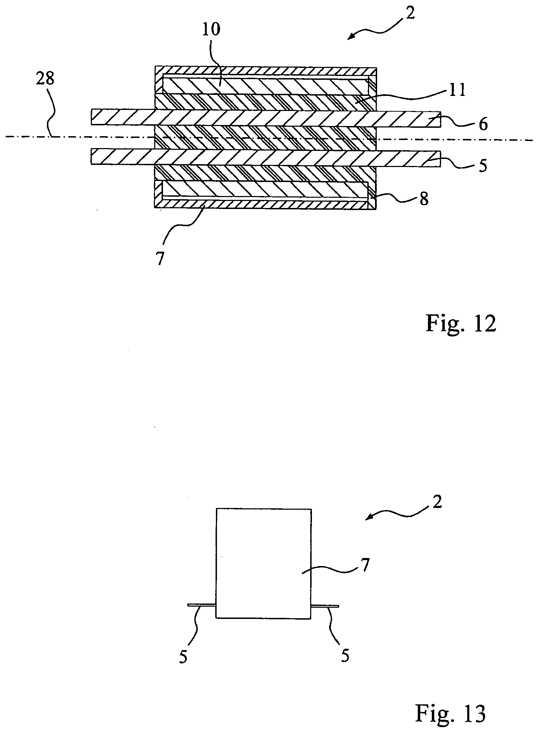

Der Deckel 8 und die Halterung 11 können zwei unterschiedliche Teile sein, die z.B. miteinander verklebt oder auf andere Weise fest miteinander verbunden sind. Gemäß einer Variante der ersten Ausführungsform ist die Halterung 11 mit dem Deckel 8 einstückig ausgebildet, was aus Fig. 12 ersichtlich ist. Die Halterung 11 ist insbesondere aus Kunststoff hergestellt.

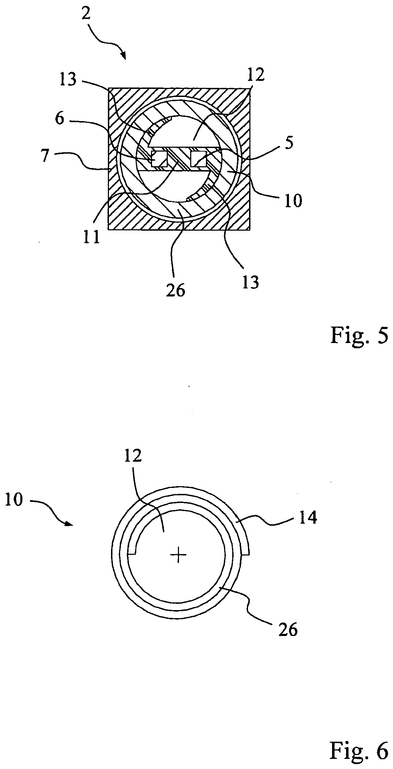

Fig. 5 zeigt einen Querschnitt durch den Sensor 2, wobei ersichtlich ist, dass die Leiter 5 und 6 in der Halterung 11 eingebettet sind, die in einer durchgehenden Ausnehmung 12 des Körpers 10 einliegt. Um den Körper 10 in dem Gehäuse 7 zu fixieren bzw. zu zentrieren, ist die Halterung 11 mit einer Fixierung versehen, die insbesondere gefederte oder federnde Laschen 13 aufweist, die an der Innenseite der die Ausnehmung 12 begrenzenden Wandung 26 des Körpers 10 anliegen. Der Körper 10 ist bevorzugt aus einem Band 14 hergestellt, das zu dem Körper 10 aufgewickelt ist, was schematisch in Fig. 6 gezeigt ist.

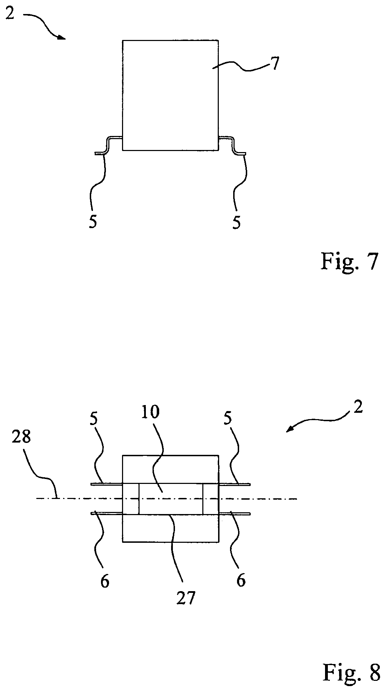

Aus Fig. 7 ist ein magnetfeldempfindlicher Sensor 2 gemäß einer zweiten Ausführungsform der Erfindung ersichtlich, wobei zu der ersten Ausführungsform identische oder ähnliche Merkmale mit den selben Bezugszeichen wie bei der ersten Ausführungsform bezeichnet sind. Die elektrischen Leiter 5 und 6 sind außerhalb des Gehäuses abgewinkelt und als Füße ausgebildet, die mit Kontaktflächen einer Leiterplatte in Kontakt gebracht werden können. Innerhalb des Gehäuses 7 verlaufen die Leiter 5 und 6 gerade und durch den Körper 10 aus Magnetwerkstoff hindurch.
Aus Fig. 8 ist der Körper 10 durch eine in der Unterseite des Gehäuses 7 vorgesehene Öffnung 27 ersichtlich, die alternativ aber auch geschlossen bzw. nicht vorhanden sein kann.
Fig. 9 zeigt eine Vorderansicht des Sensors 2, wobei die ringförmige Ausbildung des Körpers 10 dargestellt ist, der bevorzugt in eine ringförmige Ausnehmung 30 des Gehäuses 7 eingelegt bzw. eingeschoben wird. Eine Fixierung des Körpers 10 in dem Gehäuse 7 kann z.B. durch Klebstoff oder durch eine mechanische Rastierung erfolgen. Der Körper 10 kann identisch wie bei der ersten Ausführungsform ausgebildet sein.

Bei der zweiten Ausführungsform sind die Leiter 5 und 6 außerhalb des Gehäuses abgewinkelt, so dass sich der Sensor insbesondere als oberflächenmontierbares Bauteil (SMD) eignet. Gemäß einer Variante der zweiten Ausführungsform können die elektrischen Leiter 5 und 6 aber auch insgesamt gerade ausgebildet sein, was in Fig. 13 gezeigt ist. In diesem Fall kann der Sensor 2 insbesondere in eine Ausnehmung einer Leiterplatte eingehängt werden, was im Zusammenhang mit Fig. 10 erläutert wird.

Aus Fig. 10 sind mehrere Sensoren 2 ersichtlich, die an einer Leiterplatte 15 montiert sind. Entsprechend der Anzahl der zu befestigenden Sensoren 2, sind in die Leiterplatte 15 Ausnehmungen 16 eingefräst, in welche die Sensoren 2 eingehängt werden können. Die Sensoren 2 werden dabei von ihren elektrischen Leitern 5 und 6 gehalten, die auf der Leiterplatte 15 im Bereich der Ränder der Ausnehmungen 16 aufliegen. In Längsrichtung 28 der Sensoren 2 gesehen, ist die Erstreckung der Ausnehmungen 16 somit größer als die Länge der Gehäuse 7 aber kleiner als die Länge der Leiter 5 und 6. Für diese Art der Montage können Sensoren 2 beider Ausführungsformen verwendet werden. Bevorzugt sind jedoch Sensoren 2, deren Leiter 5, 6 insgesamt gerade ausgebildet sind. Das Einbringen oder Einhängen der Sensoren 2 in die Ausnehmungen 16 hat insbesondere den Vorteil, dass der Magnet 22 relativ nahe an die einzelnen Sensoren 2 herangebracht werden kann, ohne dass die Leiterplatte 15 zwischengeschaltet ist.

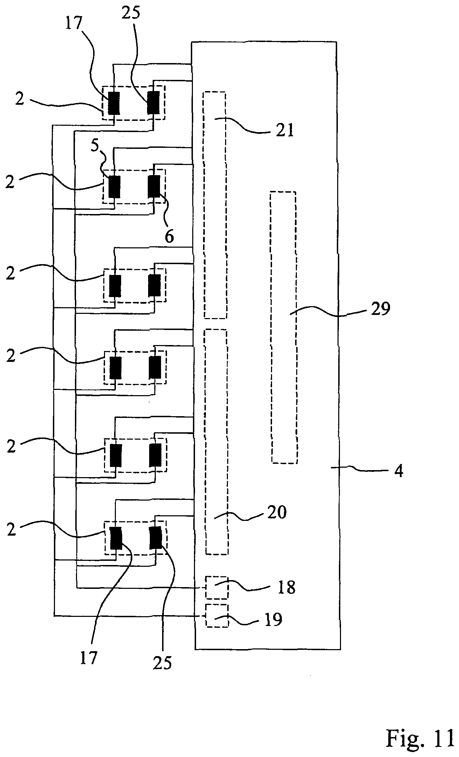

Aus Fig. 11 ist ein schematischer Schaltplan von sechs Sensoren 2 ersichtlich, wobei die Leiter 5 und 6 jedes Sensors 2 als Induktivität 17 bzw. 25 dargestellt sind. Die Auswerteeinrichtung 4 weist zwei Signalgeber 18 und 19 auf, wobei die Leiter 6 einenends mit dem Signalgeber 18 und die Leiter 5 einenends mit dem Signalgeber 19 elektrisch verbunden sind. Ferner sind die Leiter 5 und 6 andernends mit zwei Multiplexern 20 und 21 verbunden, deren Ausgangssignale zu Auswertezwecken und/oder Diagnosezwecken weiterverarbeitet werden. Diese Weiterverarbeitung erfolgt z.B. mit einem Mikroprozessor oder Mikrocontroller 29.

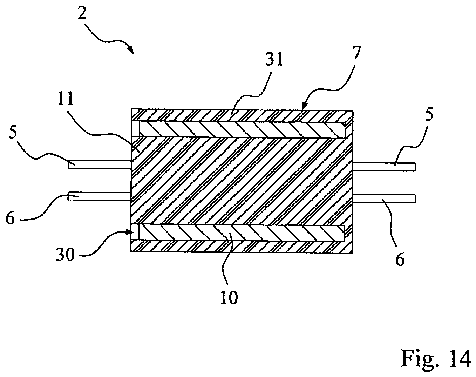

Fig. 14 zeigt eine Schnittansicht der zweiten Ausführungsform, wobei das Gehäuse 7 die ringförmige Ausnehmung 30 aufweist, in welche der Körper 10 eingeschoben ist und die insbesondere als Sackloch ausgebildet ist. Das Gehäuse 7 weist ein Gehäuseaußenteil 31 und ein Gehäuseinnenteil 11 auf, durch welches sich die Leiter 5 und 6 hindurcherstrecken, so dass das Gehäuseinnenteil 11 gleichzeitig eine Halterung für die Leiter 5 und 6 bildet. Das Gehäuseinnenteil 11 ist einstückig mit dem Gehäuseaußenteil 31 ausgebildet, wobei das Gehäuse 7 insgesamt auf Kunststoff hergestellt ist. Das Gehäuse 7 der Variante gemäß Fig. 13 ist entsprechend aufgebaut.

### Bezugszeichenliste

- 1: Messanordnung
- 2: magnetfeldempfindlicher Sensor
- 3: elektrische Leitung
- 4: Auswerteeinrichtung
- 5: elektrischer Leiter
- 6: elektrischer Leiter
- 7: Gehäuse des Sensors
- 8: Deckel
- 9: Außenfläche des Gehäuses
- 10: Körper aus Magnetwerkstoff
- 11: Halterung / Gehäuseinnenteil
- 12: durchgehende Ausnehmung durch Körper
- 13: Lasche an Halterung
- 14: Band / Folie
- 15: Leiterplatte
- 16: Ausnehmung in Leiterplatte
- 17: Induktivität
- 18: Signalgeber
- 19: Signalgeber
- 20: Multiplexer
- 21: Multiplexer
- 22: Magnet
- 23: Boden des Gehäuses
- 24: Ausnehmung in Gehäuseboden
- 25: Induktivität
- 26: Wandung des Körpers aus Magnetwerkstoff
- 27: Öffnung in Unterseite des Gehäuses
- 28: Längsachse des Körpers aus Magntewerkstoff
- 29: Mikrocontroller
- 30: Ausnehmung in Gehäuse
- 31: Gehäuseaußenteil

## Patentansprüche

1. Messanordnung mit
- einem magnetfeldempfindlichen Sensor (2), der einen Körper (10) aus Magnetwerkstoff, der eine durchgehende Ausnehmung (12) und eine Wandung (26) aufweist, wobei die Wandung (26) diese Ausnehmung (12) begrenzt, der Sensor umfassend weiterhin wenigstens einen elektrischen Leiter (5), der sich zwischen seinen beiden Enden erstreckt und durch die Ausnehmung (12) hindurchgeführt ist, wobei die Wandung (26) einen die Ausnehmung (12) umschließenden Ring bildet, sodass der Körper (10) als Ringkern einer Spule ausgestaltet ist, wobei die Spule nur eine Windung aufweist, wobei die Windung durch das einfache Hindurchfuhren des Leiters (5) durch die Ausnehmung (12) realisiert ist,
- einem relativ zu dem Körper (10) bewegbaren Magneten (22), von dessen Magnetfeld die Permeabilität des Körpers (10) in Abhängigkeit von dem Abstand zwischen dem Körper (10) und dem Magnet (22) variierbar ist, und
- einer mit dem Leiter (5) verbindbaren oder verbundenen Auswerteeinrichtung (4), mittels welcher die Änderung der Permeabilität des Körpers (10) erfassbar ist.

2. Messanordnung nach Anspruch 1 wobei der Körper (10) zwischen zwei einander gegenüberliegenden Wänden (8, 23) eines Gehäuses (7) angeordnet ist, durch welche hindurch sich der Leiter (5) erstreckt und zwischen denen der Leiter (5) ausschließlich gerade verläuft.

3. Messanordnung nach einem der vorangehenden Ansprüche, wobei der Leiter (5) insgesamt gerade ausgebildet ist.

4. Messanordnung nach einem der vorangehenden Ansprüche, wobei der Leiter (5) einen viereckigen Querschnitt aufweist.

5. Messanordnung nach einem der vorangehenden Ansprüche, wobei der Sensor (2) wenigstens einen sich zwischen zwei anderen Enden erstreckenden und durch die Ausnehmung (12) hindurchgeführten zusätzlichen elektrischen Leiter (6) aufweist.

6. Messanordnung nach Anspruch 5, wobei die Leiter (5, 6) übereinstimmend ausgebildet sind und parallel zueinander verlaufen.

7. Messanordnung nach einem der vorangehenden Ansprüche, wobei der Körper (10) aus einem aufgewickelten Band (14) besteht.

8. Messanordnung nach einem der vorangehenden Ansprüche, wobei von der Auswerteeinrichtung (4) wenigstens ein elektrischer Impuls an den Sensor (2) abgebbar und die Impulsantwort mittels der Auswerteeinrichtung (4) auswertbar ist.

9. Messanordnung nach einem der vorangehenden Ansprüche, wobei wenigstens einen zweiten magnetfeldempfindlichen Sensor (2), wobei die Sensoren (2) übereinstimmend ausgebildet und mit wenigstens einem Multiplexer (20) der Auswerteeinrichtung verbunden sind.

10. Messanordnung nach einem der vorangehenden Ansprüche, wobei der oder die Leiter (5, 6) in einer Halterung (11) eingebettet sind, die mit einem Deckel (8) fest verbunden oder einstückig ausgebildet ist, wobei die Halterung (11) in eine Öffnung (24) eines Bodens 23 eines topfförmigen Gehäuses (7) eingreift, das mittels des Deckels verschlossen ist, wobei der Körper (10) aus Magnetwerkstoff in dem Gehäuse (7) angeordnet und von der Halterung (11) durchgriffen ist.

11. Messanordnung nach einem der Ansprüche 2 bis 10, wobei das Gehäuse (7) eine ringförmige und einseitig von einem Boden begrenzte Ausnehmung (30) aufweist, in die der Körper (10) aus Magnetwerkstoff eingeschoben ist, die ringförmige Ausnehmung (30) ein Gehäuseinnenteil (11) umringt, durch welches der oder die Leiter (5, 6) hindurchgeführt sind, und der Körper (10) von einem Gehäuseaußenteil (31) umringt ist, welches mit dem Gehäuseinnenteil (11) fest verbunden oder einstückig ausgebildet ist.

## Claims

1. Measuring arrangement comprising
- a magnetic field-sensitive sensor (2) comprising a body (10) composed of magnetic material, said body having a continuous cutout (12) and a wall (26), wherein the wall (26) delimits said cutout (12), the sensor furthermore comprising at least one electrical conductor (5) which extends between its two ends and is led through the cutout (12), wherein the wall (26) forms a ring enclosing the cutout (12), so that the body (10) is configured as a toroidal core of a coil, wherein the coil has only one winding, wherein the winding is realized by the conductor (5) being simply led through the cutout (12),
- a magnet (22) movable relative to the body (10), by the magnetic field of which magnet the permeability of the body (10) is variable depending on the distance between the body (10) and the magnet (22), and
- an evaluation device (4), which is connectable or connected to the conductor (5) and by means of which the change in the permeability of the body (10) is detectable.

2. Measuring arrangement according to Claim 1, wherein the body (10) is arranged between two mutually opposite walls (8, 23) of a housing (7), through which walls the conductor (5) extends and between which walls the conductor (5) runs exclusively in a straight fashion.

3. Measuring arrangement according to either of the preceding claims, wherein the conductor (5) is embodied in a straight fashion overall.

4. Measuring arrangement according to any of the preceding claims, wherein the conductor (5) has a quadrilateral cross section.

5. Measuring arrangement according to any of the preceding claims, wherein the sensor (2) has at least one additional electrical conductor (6) which extends between two other ends and is led through the cutout (12).

6. Measuring arrangement according to Claim 5, wherein the conductors (5, 6) are embodied in a corresponding fashion and run parallel to one another.

7. Measuring arrangement according to any of the preceding claims, wherein the body (10) consists of a wound-up strip (14).

8. Measuring arrangement according to any of the preceding claims, wherein at least one electrical pulse is able to be output to the sensor (2) by the evaluation device (4) and the pulse response is evaluable by means of the evaluation device (4).

9. Measuring arrangement according to any of the preceding claims, wherein at least one second magnetic field-sensitive sensor (2), wherein the sensors (2) are embodied in a corresponding fashion and are connected to at least one multiplexer (20) of the evaluation device.

10. Measuring arrangement according to any of the preceding claims, wherein the conductor or conductors (5, 6) are embedded in a mount (11), which is fixedly connected to or embodied integrally with a cover (8), wherein the mount (11) engages into an opening (24) of a base (23) of a pot-shaped housing (7) that is closed by means of the cover (8), wherein the body (10) composed of magnetic material is arranged in the housing (7) and the mount (11) penetrates through said body.

11. Measuring arrangement according to any of Claims 2 to 10, wherein the housing (7) has a ring-shaped cutout (30) which is delimited by a base on one side and into which the body (10) composed of magnetic material is inserted, the ring-shaped cutout (30) surrounds a housing inner part (11) through which the conductor or conductors (5, 6) are led, and the body (10) is surrounded by a housing outer part (31) which is fixedly connected to or embodied integrally with the housing inner part (11).

## Revendications

1. Arrangement de mesure comprenant
- un capteur (2) sensible aux champs magnétiques, lequel comporte un corps (10) en matériau magnétique qui possède une cavité (12) continue et une paroi (26), la paroi (26) délimitant cette cavité (12), le capteur comportant en outre au moins un conducteur électrique (5) qui s'étend entre ses deux extrémités et qui passe à travers la cavité (12),
la paroi (26) formant un anneau qui entoure la cavité (12), de sorte que le corps (10) est configuré en tant que noyau toroïdal d'une bobine, la bobine ne possédant qu'un seul enroulement, l'enroulement étant réalisé par un simple passage du conducteur (5) à travers la cavité (12),
- un aimant (22) qui peut être déplacé par rapport au corps (10), dont le champ magnétique permet de faire varier la perméabilité du corps (10) en fonction de l'écart entre le corps (10) et l'aimant (22), et
- un dispositif d'interprétation (4) qui peut être relié ou qui est relié au conducteur (5), au moyen duquel la perméabilité du corps (10) peut être détectée.

2. Arrangement de mesure selon la revendication 1, le corps (10) étant disposé entre deux parois (8, 23) mutuellement opposées d'un boîtier (7), à travers lesquelles s'étend le conducteur (5) et entre lesquelles le conducteur (5) chemine exclusivement en ligne droite.

3. Arrangement de mesure selon l'une des revendications précédentes, le conducteur (5) étant globalement de configuration droite.

4. Arrangement de mesure selon l'une des revendications précédentes, le conducteur (5) possédant une section transversale quadrangulaire.

5. Arrangement de mesure selon l'une des revendications précédentes, le capteur (2) possédant au moins un conducteur (6) électrique supplémentaire qui s'étend entre deux autres extrémités et qui passe à travers la cavité (12).

6. Arrangement de mesure selon la revendication 5, les conducteurs (5, 6) étant de configuration concordante et cheminant parallèlement l'un à l'autre.

7. Arrangement de mesure selon l'une des revendications précédentes, le corps (10) se composant d'une bande enroulée (14).

8. Arrangement de mesure selon l'une des revendications précédentes, le dispositif d'interprétation (4) pouvant délivrer au moins une impulsion électrique au capteur (2) et la réponse à l'impulsion pouvant être interprétée au moyen du dispositif d'interprétation (4).

9. Arrangement de mesure selon l'une des revendications précédentes, au moins un deuxième capteur (2) sensible aux champs magnétiques, les capteurs (2) étant de configuration concordante et étant reliés à au moins un multiplexeur du dispositif d'interprétation.

10. Arrangement de mesure selon l'une des revendications précédentes, le ou les conducteurs (5, 6) étant enrobés dans un support (11), lequel est relié à demeure à un couvercle (8) ou formé d'un seul tenant avec celui-ci, le support (11) venant en prise dans une ouverture (24) d'un fond (23) d'un boîtier (7) en forme de pot, lequel est fermé au moyen du couvercle, le corps (10) en matériau magnétique étant disposé dans le boîtier (7) et étant traversé par le support (11).

11. Arrangement de mesure selon l'une des revendications 2 à 10, le boîtier (7) possédant une cavité (30) de forme annulaire et délimitée d'un côté par un fond, dans laquelle est inséré le corps (10) en matériau magnétique, la cavité (30) de forme annulaire encerclant une partie intérieure de boîtier (11) à travers laquelle passent le ou les conducteurs (5, 6), et le corps étant encerclé par une partie extérieure de boîtier (31) qui est reliée à demeure à la partie intérieure de boîtier (11) ou formée d'un seul tenant avec celle-ci.
